# EUROPEAN PATENT SPECIFICATION

(11) **EP 3 033 192 B1**
(45) Date of publication and mention of the grant of the patent: **19.07.2017**
(21) Application number: 14753123.0
(22) Date of filing: 13.08.2014
(51) Int. Cl.: B22F 3/105, B22F 5/10, B29C 67/00, F16L 59/065

(54) **OBJECT PRODUCTION**
OBJEKTHERSTELLUNG
PRODUCTION D'OBJET

(30) Priority: 14.08.2013 GB 201314514; 14.08.2013 EP 13275184
(43) Date of publication of application: 22.06.2016
(73) Proprietor: BAE Systems PLC, London SW1Y 5AD (GB)
(72) Inventor: POTTER, Mark Alfred, Preston Lancashire PR4 1AX (GB)
(74) Representative: BAE SYSTEMS plc Group IP Department
(86) International application number: PCT/GB2014/052472
(87) International publication number: WO 2015/022527

(56) References cited:
- GB-A- 2 416 319
- GB-A- 2 440 547

## Description

### FIELD OF THE INVENTION

The present invention relates to the production of objects. Examples of appropriate objects include, but are not limited to, pipes.

### BACKGROUND

Additive Manufacturing (AM) (also known as Additive Layer Manufacture (ALM), 3D printing, etc.) is a process that may be used to produce functional, complex objects, layer by layer, without moulds or dies. Typically, such processes include providing material (e.g. metal or plastic) in the form of a powder or a wire, and, using a powerful heat source such as a laser beam, electron beam or an electric, or plasma welding arc, melting an amount of that material and depositing the melted material (e.g. on a base plate of a work piece). Subsequent layers are then built up upon each preceding layer.

Example AM processes include, but are not limited to, Laser Blown Powder, Laser Powder Bed, and Wire and Arc technologies.

In a separate field, pipes for carrying fluid are lagged (i.e. thermally insulating material is wrapped around an external surface of the pipes) so as to, for example, prevent the loss of heat from fluid flowing through the pipes. The process of lagging of pipes tends to be time consuming and costly. Also, if a pipe is in a difficult to access location, the lagging of that pipe may be a difficult process. Also, lagging material tends to be bulky and prone to damage as the material tends to be light and delicate.

Some conventional lagging materials are manufactured by sandwiching a glass wool material between thin sheets of aluminium. This tends to be a relatively complex process.

In some situations, pipes are lagged for safety reasons, for example, to prevent fires and prevent people burning themselves. However, in service, a conventional thermal blanket may permit a fuel or oil leak to reach a hot surface which may then ignite.

GB2416319A discloses a method of laser melting two layers of a tube to form a double walled tube with spacers between the walls.

### SUMMARY OF THE INVENTION

In a first aspect, the present invention provides a method of manufacturing an aircraft component (for example, a thermally insulated pipe). The method comprises performing, by Additive Manufacturing apparatus, an Additive Manufacturing process to form an initial aircraft component. The initial object comprises an inner tube comprising a first end, a second end opposite to the first end, and a first intermediate portion between the first end and the second end, and an outer tube comprising a third end, a fourth end opposite to the third end, and a second intermediate portion between the third end and the fourth end. The inner tube and the outer tube are attached together such that the inner tube is inside the outer tube (for example, wholly inside). Also, the inner tube and the outer tube are attached together such that only the first end is attached to the third end and the second end is attached to the fourth end. Thus, the first intermediate portion and the second intermediate portion are spaced apart and not directly connected together, for example, by any joining structure. Also, the inner tube and the outer tube are attached together such that there is a chamber between the first intermediate portion and the second intermediate portion. Thus, the first intermediate portion and the second intermediate portion are separated by the chamber along their entire lengths. The chamber has a chamber opening. The method further comprises establishing, within the chamber, via the chamber opening, a predetermined environment, and, thereafter, sealing the chamber opening so as to maintain, within the chamber, the established environment, thereby producing the aircraft component.

Advantages provided by having the inner tube and the outer tube only connected or attached together (by a structure or structures) at the ends of those tubes means that no supporting structure or structures connecting or attaching together the first and second intermediate portions are present within the chamber. Advantages provided by this feature are at least twofold. Firstly, the aircraft component tends to have improved thermal insulation properties compared to components in which the intermediate portions are directly attached or connected together by (thermally conductive) support structures. Secondly, the aircraft component tends to have reduced weight compared to components in which the intermediate portions are directly attached or connected together by support structures. This reduced weight tends to be significant when applied across an entire aircraft.

The initial object may further comprise a first annular portion and a second annular portion. The first annular portion may connect or attach together the first end and the third end. The first annular portion may be attached to the inner tube such that fluid may flow through the inner tube, for example, a hole of the first annular portion may disposed around an opening at the first end of the inner tube. The second annular portion may connect or attach together the second end and the fourth end; The second annular portion may be attached to the inner tube such that fluid may flow through the inner tube, for example, a hole of the second annular portion may disposed around an opening at the second end of the inner tube. In some aspects, the inner tube and the outer tube are connected or attached together only by the first annular portion and the second annular portion, and by no other structures.

The aircraft component may be a pipe. A fluid may be permitted to flow through the inner tube. The pipe may be non-straight.

The initial object may further comprise at least one further inner tube, each further inner tube being attached to the outer tube such that at least part of that further inner tube is inside at least part of the outer tube and such that the chamber is between the outer tube and the at least part of that further inner tube that is inside the outer tube. Each further inner tube may comprise respective opposite ends and an intermediate portion between those ends. In some aspects, for each further inner tube, only the ends of that further inner tube are attached to the outer tube such that the intermediate portions of the further inner tubes are not directly connected to the second intermediate portion. In some aspects, for each further inner tube, the intermediate portion of that further inner tube is not directly connected (e.g. by a supporting structure) to the first intermediate portion and/or the intermediate portions of any of the other further inner tubes.

The step of establishing may comprise at least partially evacuating the chamber. The step of sealing may be performed such that the chamber is airtight. The step of evacuating the chamber may be performed such that the chamber is fully evacuated. Preferably, the walls of the chamber (i.e. the walls of the inner and outer tubes) are sufficiently strong and rigid so as not to substantially deform when the chamber is evacuated. Thus a chamber of constant size is maintained.

The step of establishing may comprise at least partially filling the chamber with an amount of material, for example a phase-change material. The step of sealing may be performed such that movement of the material from the chamber is prevented. The material may have a low thermal conductivity.

The Additive Manufacturing process may be a powder bed fusion process.

The chamber opening may be a capillary tube having a relatively small cross section.

In a further aspect, the present invention provides an aircraft component manufactured using a method according to the first aspect.

Apparatus for manufacturing an aircraft component according to the method of the first aspect may comprise Additive Manufacturing apparatus configured to perform an Additive Manufacturing process to form an initial object. The initial object comprises: an inner tube comprising a first end, a second end opposite to the first end, and a first intermediate portion between the first end and the second end; and an outer tube comprising a third end, a fourth end opposite to the third end, and a second intermediate portion between the third end and the fourth end; wherein the inner tube and the outer tube are attached together such that: the inner tube is inside the outer tube; only the first end is attached to the third end and the second end is attached to the fourth end, and such that the first intermediate portion and the second intermediate portion are spaced apart and not directly connected together; and there is a chamber between the first intermediate portion and the second intermediate portion, the chamber having a chamber opening. The apparatus further comprises means for establishing, within the chamber, via the chamber opening, a predetermined environment, and means for sealing the chamber opening so as to maintain, within the chamber, the established environment, thereby producing the aircraft component.

The initial object may further comprise a first annular portion and a second annular portion. The first annular portion may connects together the first end and the third end. The first annular portion may be attached to the inner tube such that fluid may flow through the inner tube, for example, a hole of the first annular portion may disposed around an opening at the first end of the inner tube. The second annular portion may connect together the second end and the fourth end; The second annular portion may be attached to the inner tube such that fluid may flow through the inner tube, for example, a hole of the second annular portion may disposed around an opening at the second end of the inner tube. In some aspects, the inner tube and the outer tube are connected together only by the first annular portion and the second annular portion, and by no other structures.

The aircraft component may be a pipe. A fluid may be permitted to flow through the inner tube.

The means for establishing may comprise means for at least partially evacuating the chamber.

The means for sealing may comprise means for sealing the chamber opening such that the chamber is airtight.

In a further aspect, the present invention provides a method of manufacturing an object. The method comprises: performing, by Additive Manufacturing apparatus, an Additive Manufacturing process to form an initial object, the initial object comprising a first portion and a second portion, wherein the first portion and the second portion are attached together such that at least part of the first portion is inside at least part of the second portion and such that there is a chamber between the second portion and the at least part of the first portion that is inside the second portion, the chamber having a chamber opening; establishing, within the chamber, via the chamber opening, a predetermined environment; and thereafter, sealing the chamber opening so as to maintain, within the chamber, the established environment, thereby producing the object.

The object may be a pipe. The first portion may comprise a tubular portion through which a fluid may flow. The second portion may comprise a tubular portion which surrounds, at least to some extent, the first portion.

In some aspects, the pipe is not a straight pipe. For example, the pipe may have a relatively complicated shape having a plurality of curves and bends.

The initial object may further comprise at least one further tubular portion, each further tubular portion being attached to the second portion such that at least part of that further tubular portion is inside at least part of the second portion and such that the chamber is between the second portion and the at least part of that further tubular portion that is inside the second portion.

The step of establishing the environment may comprise at least partially evacuating the chamber. For example, the chamber may be evacuated of gases and excess material so that there is an at least partial vacuum within the chamber. The step of sealing may be performed such that the chamber is airtight.

The step of evacuating the chamber may be performed such that the chamber is fully evacuated, i.e. so that there is a vacuum within the chamber.

The step of establishing the environment may comprise at least partially filling the chamber with an amount of material, for example, a material having a low thermal conductivity such as a thermosetting foam. The step of sealing may be performed such that movement of the material from the chamber is prevented.

The Additive Manufacturing process may be a powder bed fusion process.

The chamber opening may be a capillary tube having a relatively small cross section.

The initial object may further comprise a support structure within the chamber that connects the first portion to the second portion.

In a further aspect, the present invention provides an object manufactured using a method in accordance with the above aspect. The object may be a pipe.

Apparatus for manufacturing an object according to the method of the first aspect comprises: Additive Manufacturing apparatus configured to perform an Additive Manufacturing process to form an initial object, the initial object comprising a first portion and a second portion, wherein the first portion and the second portion are attached together such that at least part of the first portion is inside at least part of the second portion and such that there is a chamber between the second portion and the at least part of the first portion that is inside the second portion, the chamber having a chamber opening; means for establishing, within the chamber, via the chamber opening, a predetermined environment; and means for sealing the chamber opening so as to maintain, within the chamber, the established environment, thereby producing the object.

The object may be a pipe. The first portion may comprise a tubular portion through which a fluid may flow. The second portion may comprise a tubular portion which surrounds, at least to some extent, the first portion.

The means for establishing the environment may comprise means for at least partially evacuating the chamber (such as a vacuum chamber and a vacuum pump). The means for sealing may comprise means for sealing the chamber opening such that the chamber is airtight (such as crimping and braising apparatus, or welding apparatus).

### BRIEF DESCRIPTION OF THE DRAWINGS

Figure 1 is a schematic illustration (not to scale) showing example Additive Manufacturing apparatus;
Figure 2 is a process flow chart showing certain steps of an embodiment of a process of producing a pipe;
Figure 3 is a schematic illustration (not to scale) showing a perspective view of an intermediate pipe;
Figure 4 is a schematic illustration (not to scale) showing a cross section of the intermediate pipe;
Figure 5 is a schematic illustration (not to scale) showing a perspective view of the pipe; and
Figure 6 is a schematic illustration (not to scale) showing a cross section of the pipe.

### DETAILED DESCRIPTION

The terminology "Additive Manufacturing" is used herein to refer to all additive processes that may be used to produce functional, complex objects, layer by layer, without moulds or dies e.g. by providing material (e.g. metal or plastic) typically in the form of a powder or a wire, and, using a powerful heat source such as a laser beam, electron beam or an electric, or plasma welding arc, melting an amount of that material and depositing the melted material (e.g. on a base plate/work piece), and subsequently building layers of material upon each preceding layer.

Additive Manufacture (AM) may also be known *inter alia* as 3D printing, Direct Digital Manufacturing (DDM), Digital Manufacturing (DM), Additive Layer Manufacturing (ALM), Rapid Manufacturing (RM), Laser Engineering Net Shaping (LENS), Direct Metal Deposition, Direct Manufacturing, Electron Beam Melting, Laser Melting, Freeform Fabrication, Laser Cladding, Direct Metal Laser Sintering.

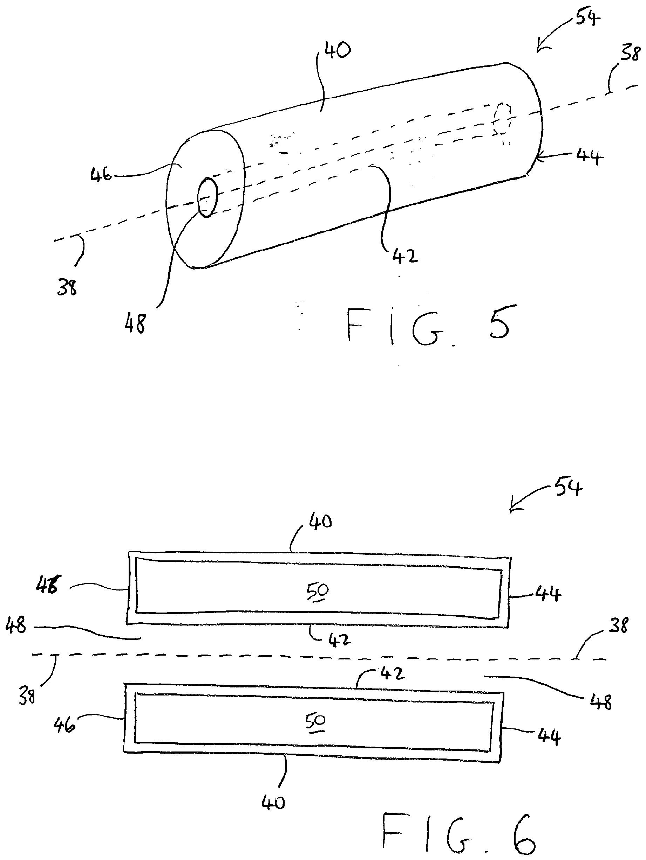

An embodiment of an object is described in more detail later below with reference to Figures 5 and 6. In this embodiment, the object is an aircraft component and in particular a pipe for transporting fluids throughout part of an aircraft.

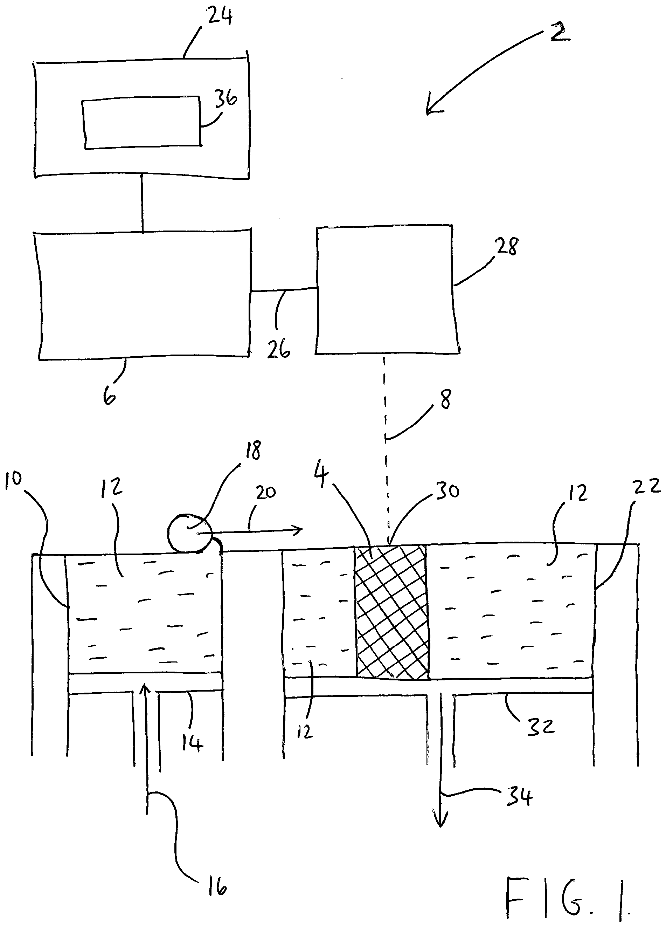

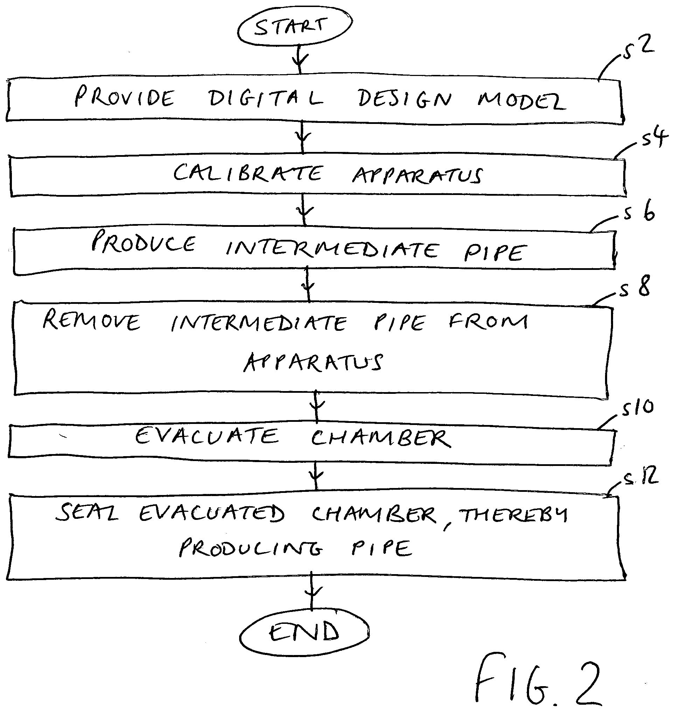

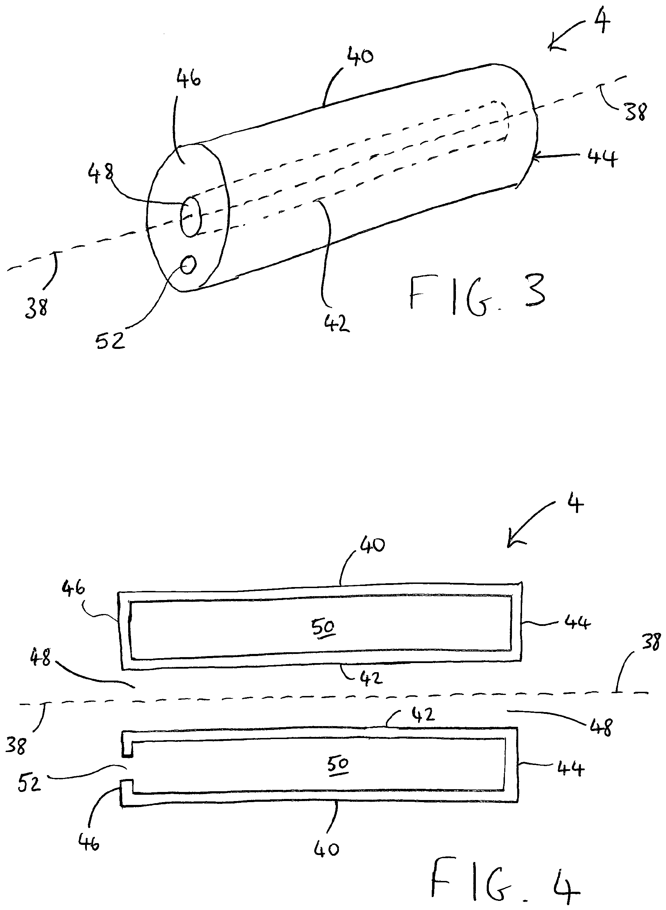

Figure 1 is a schematic illustration (not to scale) showing example Additive Manufacturing apparatus 2 that is used in an embodiment of a process of manufacturing the pipe. In this embodiment, as described in more detail later below with reference to Figure 2, the AM apparatus 2 performs an Additive Manufacturing process so as to create an intermediate pipe 4 that will be further processed to produce the pipe. The intermediate pipe 4 is described in more detail later below with reference to Figures 3 and 4.

In this embodiment, the AM apparatus 2 is apparatus for performing a powder bed AM processes. However, in other embodiments, a different type of AM apparatus is used produce the intermediate pipe 4, e.g. by performing a different type of AM process. Examples of AM processes that may be used in other embodiments include, but are not limited to, Material Extrusion processes, Material Jetting processes, Binder Jetting processes, Sheet lamination processes, Vat Photo-polymerisation processes, Powder bed fusion processes, and Directed Energy Deposition processes.

In this embodiment, the AM apparatus 2 comprises a heat source in the form of a laser source 6 configured to produce a high powered laser beam 8. The laser source 6 may be any appropriate type of laser source, e.g. a laser source that is configured to have a continuous wave power output of 500W.

The AM apparatus 2 further comprises a powder repository 10 (or powder bed) containing an amount of metallic powder 12. The metallic powder 12 is a titanium alloy powder. In other embodiments, a different type of material (e.g. a ceramic powder or a different type of metallic power such as a steel powder, a nickel-based alloy powder, an aluminium alloy powder, or a copper powder) may be used.

In operation, a first piston 14 (that is located at the bottom of the first repository 10) is raised (in the direction indicated by an arrow in Figure 3 and the reference numeral 16) so as to raise an amount of the powder 12 above a top level of the first repository 10. A roller 18 is then rolled (in the direction indicated by an arrow in Figure 3 and the reference numeral 20) over the upper surface of the first repository 10 and across an upper surface of a second repository 22. This is performed so that the metallic powder 12 that was raised above the level of the first repository 10 by the raising of the first piston 14 is spread over an upper surface of the second repository 22. Thus, a top surface of the contents of the second repository 22 is covered by a layer of the metallic powder 12. In other embodiments, a different means of spreading the metallic powder 12 across a top surface of the contents of the second repository 22, such as a wiper, may be used instead of or in addition to the roller 18.

After a layer of the metallic powder 12 has been spread across a top surface of the contents of the second repository 22, the laser source 6 is controlled by a computer 24 to deliver the laser beam 8 via an optical fibre 26 to focussing optics 28. The focussing optics focus the laser beam 8 to a focal point 30 on the layer of metallic power 22 that has been spread across a top surface of the contents of the second repository 22. The laser beam 8 melts a portion of the layer of metallic powder 12 onto which the laser beam 8 is focussed.

In this embodiment, the metallic powder 12 onto which the laser beam 8 is focussed is fully melted by the laser beam 8 and subsequently allowed to cool so as to form a layer of solid material. A second piston 32, located at the bottom of the second repository 22 is then lowered (i.e. moved in a direction indicated in Figure 3 by a solid arrow and the reference numeral 34) to allow for a further layer of metallic powder 12 to be spread by the roller 18 across the top surface of the contents of the second repository 22 (and subsequently melted and allowed to solidify).

Many layers of material are laid on top of one another (in accordance with a digital design model 36 for the intermediate pipe 4 stored by the computer 24) to produce the intermediate pipe 4.

In this embodiment, the laser source 6 and focussing optics 28 are moveable under the control of the computer 24 in an X-Y plane that is parallel to the top surface of the contents of the second repository 22. Thus, the laser focal point 30 may be directed to any point in a working envelope in the X-Y plane so that layers of material of a desired shape may be deposited.

Thus, AM apparatus 2 for performing a process of producing the intermediate pipe 4 is provided.

Figure 2 is a process flow chart showing certain steps of an embodiment of a process of producing the pipe using the above described example AM apparatus 2.

At step s2, the digital design model 36 for the intermediate pipe 4 is specified and stored by the computer 24. In this embodiment, the digital model 28 can be viewed, manipulated and analysed using the computer 24 e.g. by implementing a suitable software package or tool.

At step s4, the AM apparatus 2 is calibrated. This calibration process may, for example, include, using the digital design model 36 for the intermediate pipe 4, determining a "tool path" that will be followed by the AM apparatus 2 so as to produce the intermediate pipe 4.

At step s6, using the AM apparatus 2, an AM process is performed to form the intermediate pipe 4. In this embodiment, the AM apparatus 2 performs a powder bed AM process which is described in more detail above with reference to Figure 3. However, in other embodiments, a different type of AM apparatus and/or process is used produce the intermediate pipe 4.

In this embodiment, the AM process is performed in a substantially inert atmosphere (e.g. a chamber that is back-filled with an inert gas e.g. argon).

Figure 3 is a schematic illustration (not to scale) showing a perspective view of the intermediate pipe 4. In this embodiment, the intermediate pipe 4 is a substantially straight pipe. A longitudinal axis of the intermediate pipe 4 is indicated in Figure 3 by the reference numeral 38.

Figure 4 is a schematic illustration (not to scale) showing a cross section of the intermediate pipe 4 in a plane passing through the longitudinal axis 38.

In this embodiment the intermediate pipe 4 is made of titanium alloy. However, in other embodiments, the intermediate pipe 4 is made of one or more different types of material (e.g. a different type of metal or alloy, or a ceramic) instead of or in addition to titanium alloy.

In this embodiment, the intermediate pipe 4 comprises an outer tube 40, an inner tube 42, a first annular end portion 44, and a second annular end portion 46.

The outer tube 40 is a substantially straight elongate hollow cylinder. A length of the outer tube 40 is 280mm. An outer diameter of the outer tube 40 is approximately 35.6mm. An inner diameter of the outer tube 40 is 35.0mm diameter.

The inner tube 42 is a substantially straight elongate hollow cylinder. A length of the inner tube 42 is substantially the same as the length of the outer tube 40. An outer diameter of the inner tube 42 is approximately 20mm. An inner diameter of the inner tube 42 is 18.8mm.

In this embodiment, the longitudinal axes of the outer tube 40 and the inner tube 42 are the same as the longitudinal axis 38.

In this embodiment, the ends of the inner tube 42 are open. Thus, the inner tube 42 provides a conduit 48 through which a fluid, for example a gas or a liquid, may flow from one end of the inner tube 42 to the other end of the inner tube 42.

In this embodiment, the inner diameter of the outer tube 40 is larger than the external diameter of the inner tube 42. Also, the annular end portions 44, 46 attach the outer tube 40 to the inner tube 42 such that the outer tube 40 and the inner tube 42 are spaced apart from one another and have fixed positions relative to one another. Thus, the outer tube 40, the inner tube 42, and the end portions 8 define a chamber 50.

In this embodiment, the first annular end portion 44 connects together the outer tube 40 and the inner tube 42 at one end of the intermediate pipe 4. The first annular end portion 44 is such that fluid may not flow from the chamber 50 to outside the outer tube 40 through the first annular end portion 44. In other words, the first annular end portion provides an airtight seal for the chamber 50.

In this embodiment, the second annular end portion 46 connects together the outer tube 40 and the inner tube 42 at the opposite end of the intermediate pipe 4 to the end of the intermediate pipe 4 at which the first annular end portion 44 is located. In this embodiment, the second annular end portion 46 comprises a capillary tube 52 that connects the chamber 50 to the atmosphere outside of the outer tube 40 such that fluid (e.g. gases) may flow, via the capillary tube 52, from inside the chamber 50 to outside the outer tube 40 and vice versa. In this embodiment, the capillary tube 52 is a tube that has a small cross section relative to the size of the intermediate pipe 4.

In this embodiment, the capillary tube 52 has a diameter of 2mm.

In this embodiment, the inner tube 42 and the outer tube 40 are connected together only by the first and second annular end portions 44, 46. Thus, there are no support structures within the chamber 50 that connect together the intermediate portion of the inner tube 42 (i.e. the portion of the inner tube 42 between the ends of the inner tube 42) and the intermediate portion of the outer tube 40 (i.e. the portion of the outer tube 40 between the ends of the outer tube 40).

At step s8, the intermediate pipe 4 is removed from the AM apparatus 2.

At step s10, the chamber 50 is evacuated, or partially evacuated, of air and/or other gases, thereby creating a vacuum, or near-vacuum, within the chamber 50. In this embodiment, gasses are evacuated from the chamber 50 via the capillary tube 30. In this embodiment, gases are evacuated from the chamber 50 by sealing the intermediate pipe 4 in a vacuum chamber and removing the gases from the vacuum chamber using a vacuum pump.

In this embodiment, excess metallic powder 12 within the chamber 50 is removed from the chamber 50 via the capillary tube 52 prior to gas evacuation and sealing.

At step s12, while the chamber 50 is evacuated, or partially evacuated, of gases, the capillary tube 52 is sealed so as to make the chamber 50 airtight, thereby producing the pipe. The sealing of the capillary tube 52 may be performed using any appropriate sealing process such as by using a combination of crimping and braising. Other sealing processes such as a welding process (e.g. electrical resistance welding) may be used,

In this embodiment, the capillary tube 52 is sealed such that fluid flow into the chamber 50 is prevented. Thus, a vacuum or near-vacuum is maintained within the chamber 50.

This completes the process of manufacturing the pipe.

Figures 5 and 6 are schematic illustrations showing the pipe 54. In Figures 5 and 6, features common to the intermediate pipe 4 and the final pipe 54 are indicated with like reference numerals.

Figure 5 is a schematic illustration (not to scale) showing a perspective view of an embodiment of the pipe 54 that is produced by performing the process of Figure 2.

Figure 6 is a schematic illustration (not to scale) showing a cross section of the pipe 54 in a plane passing through the longitudinal axis 38.

In this embodiment the pipe 54 is made of titanium alloy. However, in other embodiments, the pipe 54 is made of one or more different type of material (e.g. a different type of metal, or ceramic) instead of or in addition to titanium alloy.

In this embodiment, the chamber 50 of the pipe 54 is a sealed, i.e. airtight, chamber having as its chamber wall the outer tube 40, the inner tube 42, and the end portions 44, 46. In this embodiment, the chamber 50 of the pipe 54 is an evacuated or partially evacuated chamber, i.e. a chamber that has been evacuated or partially evacuated of material such as air. Thus, in this embodiment there is a vacuum or near-vacuum in the chamber 50 of the pipe 54 between the outer tube 40 and the inner tube 42.

In an example use of the pipe 54, a fluid flows through the tubular conduit 48 provided by the inner tube 42. In this example, the temperature of this fluid is greater than an ambient temperature, i.e. a temperature of the environment in which the pipe 54 is being used. The vacuum or near vacuum within the chamber 50 of the pipe 54 advantageously tends to reduce heat transfer from the inner tube 42 to the outer tube 40. Advantageously, heat transfer from the inner tube 42 to the outer tube 40 via convection and conduction tends to be significantly reduced.

Thus, the fluid flowing through the pipe 54 is thermally insulated. Heat loss from the fluid flowing through the pipe 54 advantageously tends to be lower than if the fluid were flowing through a conventional pipe. The chamber 50 tends to provide that the pipe 54 has a lower thermal conductivity than conventional pipes.

The pipe 54 advantageously comprises integrated thermal insulation for a fluid flowing through that pipe 54. The fluid may be a liquid or a hot gas. Many conventional pipes are thermally insulated by wrapping a lagging material around the pipe. Such lagging materials tend to be expensive, bulky, prone to damage, and require extensive fabrication/tooling to manufacture. In some situations (such as use onboard an aircraft), lagging materials wrapped around a pipe are prone to being damaged. Also, in some situations, lagging materials present a heat source which can result in the ignition of fuel or oil. Also, in some situations, lagging materials may become contaminated with a fluid (such as water, oil or fuel). By using the above described pipe 54, it tends to be possible to avoid using such lagging materials.

Advantageously, by using the above described pipe 54, the use of complex manufacturing processes for producing lagging materials may be avoided.

Also, the above described pipe 54 tends to be safer than using conventional pipes lagged with conventional lagging materials.

A further advantage provided by the above described process is that complex parts, such as heat exchangers, can easily be produced.

The above described pipes tend to reduce the risk of aircraft fires, simplify aircraft design, reduce a number of manufacturing steps, improve aircraft safety, allow pipes carrying hot fluids to be positioned closer to other equipment or structures. Furthermore, an infrared signature of the aircraft may be reduced.

In the above embodiments, the pipe is a substantially straight pipe. However, in other embodiments, the pipe is not a straight pipe. For example, the pipe may include one or more bends or curves. In some embodiments, the shape of the pipe is a spiral. In some embodiments, the pipe comprises a plurality of branches such that fluid flow may be split amongst a plurality of different conduits. In some embodiments, the pipe may include one or more valves for controlling fluid flow through the pipe. AM process, such as those described above, tend to be particularly well suited to manufacturing complex structures such as embodiments of the pipe that have relatively complex shapes and/or include one or more valves. Powder bed fusion AM processes (such as the one described in more detail above with reference to Figures 1 and 2) tend to be particularly well suited to manufacturing complex structures such as embodiments of the pipe that have relatively complex shapes and/or include one or more valves.

In some embodiments, one or more pipes are joined together to form a pipe system.

In the above embodiments, the pipe comprises a single inner tube. However, inn other embodiments, the pipe comprises a plurality of inner tubes. Each of the inner tubes may provide a conduit through which a fluid may flow, as described above. The inner tubes may be separated from one another by the evacuated chamber. Each of the inner tubes may be separated from the outer tube by the evacuated chamber. Preferably, each of the inner tubes is only connected to the outer tube at its ends. AM process, such as those described above, tend to be particularly well suited to manufacturing complex structures such as embodiments of the pipe that include a plurality of separate inner tubes. Powder bed fusion AM processes tend to be particularly well suited to manufacturing complex structures such as embodiments of the pipe that include a plurality of separate inner tubes.

In the above embodiments, the outer tube is connected to the inner tube via the end portions. However, in other embodiments, the pipe includes a different structure to connect the outer tube to the inner tube instead of or in addition to the end portions. For example, in some embodiments, support pillars within the chamber attach the outer tube to the inner tube. Also for example, in some embodiments, a lattice or honeycomb shaped support structure attaches the outer tube to the inner tube. Such support structures advantageously tend to increase the strength of the pipe. Such support structures tend to reduce the likelihood of the pipe being damaged. However, in some embodiments, the inclusion of such a support structure may increase the thermal conductivity of the pipe wall and the weight of pipe.

In the above embodiments, the chamber extends along substantially the entire length of the pipe. However, in other embodiments, the chamber does not extend along the entire length of the pipe.

In the above embodiments, the chamber is evacuated of gases (e.g. air) so as to provide a vacuum or near-vacuum within the sealed chamber. However, in other embodiments, instead of being evacuated, the chamber is filled with a thermally insulating material such as a thermosetting foam or a fluid (such as a gas) with a relatively low thermal conductivity (e.g. relative to the environment in which the pipe is being used and/or relative to the material from which the pipe is made). In such embodiments, the outer tube may be made of a plastic. In some embodiments, the chamber is filled with a "phase change material". Such a phase change material held within the chamber may change state (e.g. from a solid to a liquid) by absorbing energy from the fluid flowing through the inner pipe, and thereby prevent heat escaping from the pipe. Such phase change material may act as a thermal regulator or time bound safety device.

In the above embodiments, the pipe is for transporting fluids, for example, hot liquids or gases. However, in other embodiments, the pipe may be a conduit through which, for example, an instrument wire, a pressure sensor/temperature probe, an optical device, etc. may be passed. The insulation of the device passing through the pipe may be used to control the efficiency of that device.

In the above embodiments, the produced object is a pipe. However, in other embodiments, the object is a different type of object (i.e. an object other than a pipe). For example, the object may be a container for containing fluids.

In some embodiments, a wall of the chamber such as the external surface of the inner tube and/or the internal surface of the outer tube are silvered or mirrored to reflect heat that is radiated across the chamber from the inner tube. Such a silvered surface may be deposited during the AM process. Alternatively, after the intermediate pipe have been produced, and prior to the evacuation of the chamber, a reflective coating may be applied to the inner walls of the chamber, or the internals walls of the chamber may be processed (e.g. chemically machined or acid etched) so as to make the internal surface of the chamber more reflective.

## Claims

1. A method of manufacturing an aircraft component (54), the method comprising:
performing, by Additive Manufacturing apparatus (2), an Additive Manufacturing process to form an initial object (4), the initial object (4) comprising:
an inner tube (42) comprising a first end, a second end opposite to the first end, and a first intermediate portion between the first end and the second end;
an outer tube (40) comprising a third end, a fourth end opposite to the third end, and a second intermediate portion between the third end and the fourth end; wherein
the inner tube (42) is inside the outer tube (40);
the inner tube (42) and the outer tube (40) are attached together in such a way that only the first end and the third end are attached together and the second end and the fourth end are attached together, and such that the first intermediate portion and the second intermediate portion are spaced apart and not directly connected together; and
there is a chamber (50) between the first intermediate portion and the second intermediate portion, the chamber (50) having a chamber opening (52);
establishing, within the chamber (50), via the chamber opening (52), a predetermined environment; and
thereafter, sealing the chamber opening (52) so as to maintain, within the chamber (50), the established environment, thereby producing the aircraft component (54).

2. A method according to claim 1, the method further comprising filling the chamber with a phase change material, the phase change material being configured to change state by absorbing energy from a fluid flowing through the inner tube.

3. A method according to claim 1 or 2, wherein an external surface of the inner tube and the internal surface of the outer tube are silvered or mirrored.

4. A method according to any of claims 1 to 3, wherein
the initial object (4) further comprises a first annular portion (44) and a second annular portion (46);
the first annular portion (44) connects together the first end and the third end;
the second annular portion (46) connects together the second end and the fourth end; and
the inner tube (42) and the outer tube (40) are connected together only by the first annular portion (44) and the second annular portion (46).

5. A method according to any of claims 1 to 4, wherein the aircraft component (54) is a pipe, and a fluid is permitted to flow through the inner tube (42).

6. A method according to claim 5, wherein the pipe is non-straight.

7. A method according to any of claims 1 to 6, wherein the initial object (4) further comprises at least one further inner tube, each further inner tube being attached to the outer tube (40) such that at least part of that further inner tube is inside at least part of the outer tube (40) and such that the chamber (50) is between the outer tube (40) and the at least part of that further inner tube that is inside the outer tube (40).

8. A method according to claim 7, wherein:
each further inner tube comprises respective opposite ends and an intermediate portion between those ends; and
for each further inner tube, only the ends of that further inner tube are attached to the outer tube (40) such that the intermediate portions of the further inner tubes are not directly connected to the second intermediate portion.

9. A method according to any of claims 1 to 8, wherein:
the step of establishing comprises at least partially evacuating the chamber (50); and
the step of sealing is performed such that the chamber (50) is airtight.

10. A method according to claim 9, wherein the step of evacuating the chamber (50) is performed such that the chamber (50) is fully evacuated.

11. A method according to any of claims 1 to 8, wherein:
the step of establishing comprises at least partially filling the chamber (50) with an amount of material; and
the step of sealing is performed such that movement of the material from the chamber (50) is prevented.

12. A method according to claim 11, wherein the material has a low thermal conductivity.

13. A method according to any of claims 1 to 12, wherein the Additive Manufacturing process is a powder bed fusion process.

14. A method according to any of claims 1 to 13, wherein the chamber opening (52) is a capillary tube having a relatively small cross section.

15. An aircraft component (54) manufactured using a method according to any of claims 1 to 14.

## Patentansprüche

1. Verfahren zur Fertigung einer Luftfahrzeugkomponente (54), wobei das Verfahren Folgendes umfasst:
Durchführen durch eine Vorrichtung (2) zur additiven Fertigung eines additiven Fertigungsprozesses zur Bildung eines Erstgegenstands (4), wobei der Erstgegenstand (4) Folgendes umfasst:
ein inneres Rohr (42), das ein erstes Ende, ein zweites Ende gegenüber dem ersten Ende und einen ersten Zwischenabschnitt zwischen dem ersten und dem zweiten Ende umfasst;
ein äußeres Rohr (40), das ein drittes Ende, ein viertes Ende gegenüber dem dritten Ende und einen zweiten Zwischenabschnitt zwischen dem dritten Ende und dem vierten Ende umfasst; wobei sich das innere Rohr (42) in dem äußeren Rohr (40) befindet;
das innere Rohr (42) und das äußere Rohr (40) derart aneinander befestigt sind, dass lediglich das erste Ende und das dritte Ende aneinander befestigt sind und das zweite Ende und das vierte Ende aneinander befestigt sind, und derart, dass der erste Zwischenabschnitt und der zweite Zwischenabschnitt voneinander beabstandet sind und nicht direkt miteinander verbunden sind; und
es eine Kammer (50) zwischen dem ersten Zwischenabschnitt und dem zweiten Zwischenabschnitt gibt, wobei die Kammer (50) eine Kammeröffnung (52) aufweist;
Erzeugen einer vorbestimmten Umgebung in der Kammer (50) über die Kammeröffnung (52); und
danach dahingehendes Abdichten der Kammeröffnung (52), die erzeugte Umgebung in der Kammer (50) aufrechtzuerhalten, wodurch die Luftfahrzeugkomponente (54) hergestellt wird.

2. Verfahren nach Anspruch 1, wobei das Verfahren ferner Füllen der Kammer mit einem Phasenwechselmaterial umfasst, wobei das Phasenwechselmaterial dazu konfiguriert ist, durch Absorbieren von Energie von einem durch das innere Rohr strömenden Fluid den Zustand zu wechseln.

3. Verfahren nach Anspruch 1 oder 2, wobei eine äußere Fläche des inneren Rohrs und die innere Fläche des äußeren Rohrs versilbert oder verspiegelt sind.

4. Verfahren nach einem der Ansprüche 1-3, wobei der Erstgegenstand (4) ferner einen ersten ringförmigen Abschnitt (44) und einen zweiten ringförmigen Abschnitt (46) umfasst;
der erste ringförmige Abschnitt (44) das erste Ende und das dritte Ende miteinander verbindet;
der zweite ringförmige Abschnitt (46) das zweite Ende und das vierte Ende miteinander verbindet; und
das innere Rohr (42) und das äußere Rohr (40) lediglich durch den ersten ringförmigen Abschnitt (44) und den zweiten ringförmigen Abschnitt (46) miteinander verbunden sind.

5. Verfahren nach einem der Ansprüche 1-4, wobei die Luftfahrzeugkomponente (54) eine Leitung ist und das Strömen eines Fluids durch das innere Rohr (42) gestattet wird.

6. Verfahren nach Anspruch 5, wobei die Leitung nicht gerade ist.

7. Verfahren nach einem der Ansprüche 1-6, wobei der Erstgegenstand (4) ferner mindestens ein weiteres inneres Rohr umfasst, wobei jedes weitere innere Rohr derart an dem äußeren Rohr (40) befestigt ist, dass sich mindestens ein Teil des weiteren inneren Rohrs in mindestens einem Teil des äußeren Rohrs (40) befindet und dass sich die Kammer (50) zwischen dem äußeren Rohr (40) und dem mindestens einen Teil des weiteren inneren Rohrs, der sich in dem äußeren Rohr (40) befindet, befindet.

8. Verfahren nach Anspruch 7, wobei:
jedes weitere innere Rohr jeweilige gegenüberliegende Enden und einen Zwischenabschnitt zwischen jenen Enden umfasst; und
bei jedem weiteren inneren Rohr lediglich die Enden dieses weiteren inneren Rohrs derart an dem äußeren Rohr (40) befestigt sind, dass die Zwischenabschnitte der weiteren inneren Rohre nicht direkt mit dem zweiten Zwischenabschnitt verbunden sind.

9. Verfahren nach einem der Ansprüche 1-8, wobei:
der Schritt des Erzeugens zumindest teilweise Entlüften der Kammer (50) umfasst; und
der Schritt des Abdichtens derart durchgeführt wird, dass die Kammer (50) luftdicht ist.

10. Verfahren nach Anspruch 9, wobei der Schritt des Entlüftens der Kammer (50) derart durchgeführt wird, dass die Kammer (50) vollständig entlüftet ist.

11. Verfahren nach einem der Ansprüche 1-8, wobei:
der Schritt des Erzeugens zumindest teilweise Füllen der Kammer (50) mit einer Materialmenge umfasst; und
der Schritt des Abdichtens derart durchgeführt wird, dass eine Bewegung des Materials aus der Kammer (50) heraus verhindert wird.

12. Verfahren nach Anspruch 11, wobei das Material eine geringe Wärmeleitfähigkeit aufweist.

13. Verfahren nach einem der Ansprüche 1-12, wobei der additive Fertigungsprozess ein Powder Bed Fusion-Prozess ist.

14. Verfahren nach einem der Ansprüche 1-13, wobei die Kammeröffnung (52) ein Kapillarrohr mit einem relativ geringen Querschnitt ist.

15. Luftfahrzeugkomponente (54), die unter Verwendung eines Verfahrens nach einem der Ansprüche 1-14 gefertigt wird.

## Revendications

1. Méthode de fabrication d'un composant d'aéronef (54), la méthode comprenant :
réaliser, au moyen d'un appareil de fabrication additive (2), un procédé de fabrication additive afin de former un objet initial (4), l'objet initial (4) comprenant :
un tube intérieur (42) comprenant une première extrémité, une deuxième extrémité opposée à la première extrémité et une première partie intermédiaire entre la première extrémité et la deuxième extrémité ;
un tube extérieur (40) comprenant une troisième extrémité, une quatrième extrémité opposée à la troisième extrémité et une seconde partie intermédiaire entre la troisième extrémité et la quatrième extrémité ; dans laquelle le tube intérieur (42) se trouve à l'intérieur du tube extérieur (40) ;
le tube intérieur (42) et le tube extérieur (40) sont fixés l'un à l'autre de telle sorte que seule la première extrémité et la troisième extrémité soient fixées l'une à l'autre et la deuxième extrémité et la quatrième extrémité soient fixées l'une à l'autre, et de telle sorte que la première partie intermédiaire et la seconde partie intermédiaire soient espacées et ne soient pas directement reliées l'une à l'autre ; et
une chambre (50) existe entre la première partie intermédiaire et la seconde partie intermédiaire, la chambre (50) comportant une ouverture de chambre (52) ;
établir, à l'intérieur de la chambre (50), par le biais de l'ouverture de chambre (52), un milieu prédéterminé ; et
à la suite de cela, fermer hermétiquement l'ouverture de chambre (52) de façon à maintenir, à l'intérieur de la chambre (50), le milieu établi, de manière à produire ainsi le composant d'aéronef (54).

2. Méthode selon la revendication 1, la méthode comprenant en outre le fait de remplir la chambre avec un matériau à changement de phase, le matériau à changement de phase étant configuré pour changer d'état par l'absorption d'énergie à partir d'un fluide s'écoulant à travers le tube intérieur.

3. Méthode selon la revendication 1 ou 2, dans laquelle une surface extérieure du tube intérieur et la surface intérieure du tube extérieur sont dotées d'un revêtement argenté ou spéculaire.

4. Méthode selon l'une quelconque des revendications 1 à 3, dans laquelle
l'objet initial (4) comprend en outre une première partie annulaire (44) et une seconde partie annulaire (46) ;
la première partie annulaire (44) relie l'une à l'autre la première extrémité et la troisième extrémité ;
la seconde partie annulaire (46) relie l'une à l'autre la seconde extrémité et la quatrième extrémité ; et
le tube intérieur (42) et le tube extérieur (40) sont reliés l'un à l'autre uniquement par le biais de la première partie annulaire (44) et de la seconde partie annulaire (46).

5. Méthode selon l'une quelconque des revendications 1 à 4, dans laquelle le composant d'aéronef (54) est un conduit, et un fluide peut s'écouler à travers le tube intérieur (42).

6. Méthode selon la revendication 5, dans laquelle le conduit n'est pas droit.

7. Méthode selon l'une quelconque des revendications 1 à 6, dans laquelle l'objet initial (4) comprend en outre au moins un tube intérieur supplémentaire, chaque tube intérieur supplémentaire étant fixé au tube extérieur (40) de telle sorte qu'au moins une partie de ce tube intérieur supplémentaire se trouve à l'intérieur d'au moins une partie du tube extérieur (40) et de telle sorte que la chambre (50) se trouve entre le tube extérieur (40) et la partie au moins dudit tube intérieur supplémentaire qui se trouve à l'intérieur du tube extérieur (40).

8. Méthode selon la revendication 7, dans laquelle :
chaque tube intérieur supplémentaire comprend des extrémités respectives opposées et une partie intermédiaire entre ces extrémités ; et
pour chaque tube intérieur supplémentaire, seules les extrémités de ce tube intérieur supplémentaire sont fixées au tube extérieur (40) de telle sorte que les parties intermédiaires des tubes intérieurs supplémentaires ne soient pas directement reliées à la seconde partie intermédiaire.

9. Méthode selon l'une quelconque des revendications 1 à 8, dans laquelle :
l'étape d'établissement comprend le fait de vider au moins partiellement la chambre (50) ; et
l'étape de fermeture hermétique est effectuée de telle sorte que la chambre (50) soit étanche à l'air.

10. Méthode selon la revendication 9, dans laquelle l'étape de vidange de la chambre (50) est effectuée de telle sorte que la chambre (50) soit totalement vidée.

11. Méthode selon l'une quelconque des revendications 1 à 8, dans laquelle :
l'étape d'établissement comprend le fait de remplir au moins partiellement la chambre (50) avec une certaine quantité de matériau ; et
l'étape de fermeture hermétique est effectuée de telle sorte qu'un déplacement du matériau à partir de la chambre (50) soit impossible.

12. Méthode selon la revendication 11, dans laquelle le matériau présente une faible conductivité thermique.

13. Méthode selon l'une quelconque des revendications 1 à 12, dans laquelle le procédé de fabrication additive est un procédé de fusion sur lit de poudre.

14. Méthode selon l'une quelconque des revendications 1 à 13, dans laquelle l'ouverture de chambre (52) est un tube capillaire présentant une section transversale relativement petite.

15. Composant d'aéronef (54) fabriqué au moyen de la méthode selon l'une quelconque des revendications 1 à 14.
